# EUROPÄISCHE PATENTSCHRIFT

(11) **EP 3 149 213 B1**
(45) Veröffentlichungstag und Bekanntmachung des Hinweises auf die Patenterteilung: **05.12.2018**
(21) Anmeldenummer: 15727902.7
(22) Anmeldetag: 21.05.2015
(51) Int. Cl.: C22B 3/04, B09B 3/00, C22B 7/00, C22B 21/00

(54) **VERFAHREN ZUR AUFBEREITUNG VON VERPACKUNGSMATERIAL**
METHOD FOR PROCESSING PACKAGING MATERIAL
PROCÉDÉ DE TRAITEMENT D'UN MATÉRIAU D'EMBALLAGE

(30) Priorität: 28.05.2014 AT 4222014
(43) Veröffentlichungstag der Anmeldung: 05.04.2017
(73) Patentinhaber: Andritz AG, 8045 Graz (AT)
(72) Erfinder: GABL, Helmuth, 8046 Graz (AT)
(74) Vertreter: Tschinder, Thomas
(86) Internationale Anmeldenummer: PCT/EP2015/061232
(87) Internationale Veröffentlichungsnummer: WO 2015/181038

(56) Entgegenhaltungen:
- EP-A1- 0 775 760
- EP-A1- 1 772 554
- WO-A1-95/32153
- GB-A- 518 260
- JP-A- 2005 230 721

## Beschreibung

Den Gegenstand dieser Erfindung bildet ein Verfahren zur Aufbereitung von metallisierten Verpackungsmaterialien, insbesondere von Getränkekartons, wie Tetra Pak, ELOPAK, etc. oder von Sichtverpackungen (Blister).

Getränkekartons bestehen trotz ihres Namens nicht nur aus Karton, sondern aus mehreren, eng miteinander verbundener Schichten aus Karton und Kunststoff und- für länger haltbare Produkte wie Saft und Milch - auch aus Aluminium. Aluminium schützt das Produkt vor Sauerstoff und Licht. Bereits im Jahr 2006 betrug der Zellstoffanteil in Getränkekartons nur 60-76 Prozent, der Kunststoffanteil 13 - 34 Prozent und der Aluminiumanteil 0-6 Prozent. Bei der Kunststoffschicht handelt es sich meist um Polyethylen.

Tetra Pak ist eine Marke von Getränkekartons, die seit den 1950er Jahren vom gleichnamigen aus Schweden stammenden Unternehmen vertrieben werden und weltweite Verbreitung insbesondere als Verpackung für Milch gefunden haben. Der Markenname fand als Synonym für Getränkekartons im Allgemeinen Eingang in den deutschen Sprachgebrauch.

Von den zum Recycling gelieferten Getränkekartons wird derzeit hauptsächlich der Zellstoffanteil, also die Fasern, recycelt. Die Fasern werden bei der Papier-, Karton- und Pappenherstellung wiederverwendet. Der mittlerweile erhebliche Kunststoffanteil wird in der Regel energetisch verwertet, also verbrannt, und der Aluminiumanteil als Bauxitersatz in der Zementindustrie mitverbrannt. Oft werden die Kunststoff- und Aluminiumanteile auch nur zu Ballen verpresst und deponiert. Diese Rückstände dienen damit nur als Primärbrennstoffersatz oder landen auf der Deponie.

Mit Hilfe von speziellen Formprozessen werden aus zerkleinerten Getränkekartons einfache Gegenstände (Obstkisten, etc.) ohne spezielle Qualitätsanforderungen hergestellt. Dafür werden die enthaltenen Kunststoffe als Verbundmaterial angeschmolzen, die Restfasern, das Aluminium sowie Reststoffe werden mitverarbeitet.

Es gibt auch Recyclingkonzepte, bei denen der Kunststoffanteil verölt und das Aluminium in Flockenform zurückgewonnen wird.

In der JP 2005 230721 A und der GB 518 260 A wird Aluminium enthaltenes Altpapier mit Säue behandelt.

Bei einem anderen Verfahren werden die Rejekte, also die Kunststoff- und Aluminiumfolien, in einem Gasreaktor bei Temperaturen oberhalb 400°C einer Pyrolyse unterworfen. Dabei beginnt das Polyethylen ab 400°C zu vergasen (Pyrolysegas), wobei das Aluminium bei dieser Temperatur in fester Form erhalten bleibt. Das Aluminium fällt dabei aber als Agglomerat an, das mit nicht vergasten Störstoffen (meist Kohlenstoffverbindungen aber auch andere Metalle) verunreinigt ist. Das brennbare Pyrolysegas liefert anschließend bei seiner Verbrennung elektrische und Wärmeenergie. Ein Verfahren, bei dem die Kunststofffraktion in einer Wirbelschicht vergast wird, ist beispielsweise in der WO 00/09771 A1 oder in der WO 00/09770 A1 beschrieben.

Die WO 97/49494 A1 beschreibt ein Verfahren, bei dem metallisiertes Verpackungsmaterial mit Hilfe eines Refiners zerkleinert wird und die Faserstoffe über eine Auflösetrommel rückgewonnen werden.

Bei einem weiteren Recyclingverfahren werden die Rejekte mit einem über 1100°C heißen Plasmastrahl behandelt. Das Aluminium der Rejekte verlässt zwar in verwertbarer Barrenform den Prozess, jedoch ist dieses Verfahren sehr energieaufwendig.

Eine Rückgewinnung der Einzelkomponenten von Getränkekartons als echte Wertstoffe, also ohne eine Verbrennung des Kunststoffanteils, wurde zwar verschiedentlich angedacht und in Pilotanlagen getestet, jedoch noch nirgendwo industriell angewandt.

So beschreibt die WO 2010/052016A2 ein Verfahren, bei dem die zerkleinerten Kunststoffabfälle mit Hilfe der SchwimmSink-Trenntechnik getrennt werden. Dabei wird auch eine selektive Lösemittelbehandlung angewendet, durch die einzelne Kunststoffkomponenten aufgelöst werden und somit von der Metall- oder weiteren Kunststoffkomponente abgetrennt werden. Mit diesem Verfahren können unterschiedliche Kunststofflagen singulär zurückgewonnen werden. Der Faserstoff fällt ebenso wie die Aluminiumschicht als eigene Fraktion an.

Die DE 31 10 254 A1 beschreibt ein Recyclingverfahren für Blister-Verpackungen, die unter anderem auch für die Verpackung von Arzneimittel in Tabletten- oder Kapselform verwendet werden. Dabei werden die Alu-PVC-Abfallfolien granuliert, mit Zusätzen versehen und als Ausgangsmaterial von thermoplastischen Kunststoffen verwendet. Eine getrennte Rückgewinnung von Kunststoff und Aluminium ist dabei nicht möglich.

Der Erfindung liegt ebenfalls die Aufgabe zugrunde, ein elegantes Verfahren bereitzustellen, durch das die Basisfraktionen (Kunststoff und Aluminium) aus Verpackungsmaterialien zurückgewonnen werden können.

Gelöst wird diese Aufgabe durch ein Verfahren gemäß Patentanspruch 1.

Beim erfindungsgemäßen Verfahren wird das Aluminium mit Hilfe von Säure aufgelöst, sodass im Wesentlichen nur der Kunststoffanteil als Feststoff übrig bleibt. Sollten auch Faserstoffe im Verpackungsmaterial vorhanden sein, so werden diese vor der Säurebehandlung abgetrennt. Die metallhaltige Lösung der Säure wird dann einer pyrohydrolytischen Behandlung, vorzugsweise in einem Sprühröstreaktor, unterzogen. Dabei wird die Säure durch Sprührösten der metallhaltigen Lösung und anschließende Absorption und/oder Kondensation der dabei gebildeten Gase in einer wässrigen Absorptionslösung rückgewonnen. Die rückgewonnene Säure kann dann wieder für die Auflösung des Aluminiums verwendet werden. Damit eine hochwertige aluminiumhaltige Lösung erhalten werden kann, werden erfindungsgemäß andere Metalle, wie Eisen oder auch Nichteisenmetalle (Kupfer etc.) zuvor detektiert und aus dem Produktstrom entfernt, und zwar erfindungsgemäß mit Magneten, Eddy Current Technologie bzw. mit NIR, XRF, Induktion gekoppelt mit Ausblassystemen oder mit SchwimmSink-Technologie.

Die während der Pyrohydrolyse entstehenden Metalloxide, also das Aluminiumoxid, werden am Boden des Sprührösters oder auch bei der Gasreinigung (Zyklonabscheider) abgezogen. Der Aufbau einer derartigen Anlage zur Säurerückgewinnung wird beispielsweise in der AT395312B und in der EP0775760A1 beschrieben.

Durch entsprechende Einstellung der Prozessparameter während der pyrohydrolytischen Behandlung kann auf die Aluminiumoxidqualität Einfluss genommen werden, so kann beispielsweise die Bildung von kubischen γ-Al₂O₃, sowie die Kristallinität oder die Bildung von rhomboedrische (trigonale) α-Al₂O₃ begünstigt werden. Auch eine Beeinflussung der Korngrößenverteilung ist möglich

Bei Verpackungsmaterialen, die auch Faserstoffe enthalten, ist es sinnvoll, wenn zuerst die Faserstoffe abgelöst werden und die dabei gebildete Faserstoffsuspension von den verbliebenden Kunststoff- und Aluminiumresten entfernt bzw. getrennt wird. Danach erfolgt das Auflösen des Aluminiums mit Hilfe der Säure.

Vorzugsweise wird als Säure Salzsäure (HCl) verwendet, da sich damit das Aluminium besonders gut auflösen lässt, ohne dass der Kunststoff, beispielsweise Polyethylen, angegriffen wird.

Die Qualität des gebildeten Aluminiumoxids lässt sich weiter steigern, wenn im Anschluss an die pyrohydrolytische Behandlung eine thermische Nachbehandlung des Aluminiumoxids erfolgt. Durch diese Nachbehandlung werden verbleibende Kohlenstoffreste verbrannt und der Anteil von α-Al₂O₃ und die Kristallinität erhöht. Die thermische Nachbehandlung erfolgt bei Temperaturen zwischen 800°C bis 2400°C, vorzugweise bei 900 bis 2000°C, insbesondere bei 1400°C bis 1900°C.

Das Aluminiumoxid kann beispielsweise in einem Drehrohrofen oder in einem Plasmareaktor nachbehandelt werden.

In einer Ausführungsform der Erfindung wird das Aluminiumoxid nach der pyrohydrolytischen Behandlung oder nach der thermischen Nachbehandlung gemahlen. Der Mahlprozess kann beispielsweise mit einer Feststoffmühle oder in einem flüssigen Medium mit Hilfe von Ultraschall erfolgen.

Zur Qualitätssteigerung des Aluminiumoxids und zur Kostenreduktion ist es vorteilhaft, wenn eine Klassierung nach Partikelgröße erfolgt.

Es ist vorteilhaft, wenn vor der Säurezugabe noch an den Kunststoffen bzw. am Aluminium anhaftende Fasern in hochdynamischen Maschinen, wie z.B. in einer Friktionsmaschine oder in einem Friktionstrockner, separiert werden. Dadurch wird gewährleistet, dass der Faseranteil vor dem Zusetzen der Säure sehr gering ist, zum Beispiel weniger als 1%.

Es ist sinnvoll, dass die Kunststoffe nach Abtrennung der metallhaltigen Lösung einer weiteren Reinigungsstufe zugeführt werden, in der verbleibende Restfasern und Säurereste von den Kunststoffen entfernt werden. Das für die Wäsche verwendete Waschwasser kann der Absorptionskolonne zur Säurerückgewinnung zugeführt werden.

Vorzugsweise wird das Kunststoff-Aluminiumgemisch vor der Säurebehandlung zerkleinert, damit sich die Angriffsfläche für die Säure vergrößert und das Aluminium dadurch schneller aufgelöst werden kann. Es ist günstig, wenn die Säurebehandlung bei Temperaturen zwischen 50°C und 80°C durchgeführt wird.

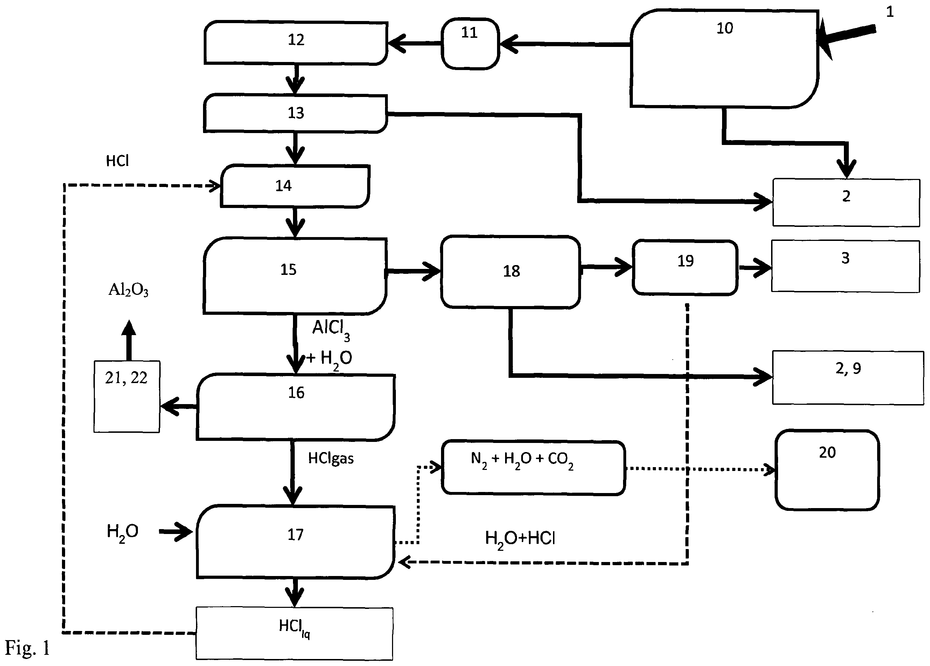

Im Folgenden wird in Fig. 1 die Erfindung anhand eines Ausführungsbeispiels für die Rückgewinnung der Wertstoffe aus Getränkekartons beschrieben.
Die gegebenenfalls zerkleinerten Getränkekartons 1 werden gemeinsam mit Wasser einer Faserstoffrückgewinnung 10 zugeführt. Die Faserstoffrückgewinnung 10 kann dabei eine Auflösetrommel (FFD), einen Hochkonsistenzpulper (HC), einen Mittelkonsistenzpulper (MC) oder einen Niederkonsistenzpulper (LC) beinhalten. Derartige Anlagen zur Faserstoffrückgewinnung 10 aus Getränkekartons 1 sind bekannt und werden daher hier nicht genauer beschrieben. Die rückgewonnen Fasern 2 können dann, nach einer fallweise notwendigen Stoffnachreinigung von Alu Flakes, wieder für die Papier- oder Kartonherstellung verwendet werden.

Die weitgehend von Fasern befreiten Kunststoffe und Aluminiumfolienteile werden in einem Schredder 11 zerkleinert, beispielsweise auf ein Größe von 50 x 50 mm, oder aber auf 15 x 15 mm oder auf 80 x 80 mm. Danach werden Eisenteile durch einen Metallabscheider 12, beispielsweise einem Überbandmagnet, aus dem Produktstrom entfernt, bzw. in einem Folgegerät auch die Nichteisenmetalle.

In einem weiteren Prozessschritt 13 werden die noch am Kunststoff und am Aluminium anhaftenden Fasern 2 mit Hilfe von Friktionsmaschinen bzw. Friktionstrocknern separiert. Dieser Faseranteil kann bis zu 25% bezogen auf den Gesamtrejektanteil betragen. Die rückgewonnenen Fasern 2 können dann in einer weiteren Prozessstufe nachaufbereitet werden und mit den aus der Faserstoffrückgewinnung 10 gewonnene Fasern zusammengeführt werden.

In der Auflösestufe 14 geht durch die Zugabe von hochprozentiger (> 18%ig) Salzsäure (HCl), vorzugsweise bei erhöhter Temperatur und unter kontinuierlichen Rühren die Aluminiumschicht in Lösung. Es entsteht eine AlCl₃ Lösung, die im nachfolgenden Filtrationsschritt 15 vom noch festen Kunststoffanteil, z.B. dem Polyethylen, getrennt wird. Die Metalllösung kann im Anschluss durch nasschemische oder physikalische Methoden gereinigt werden, dadurch kann die Reinheit des Aluminiumoxids erhöht werden. Es ist auch denkbar, dass der AlCl₃ Lösung gezielt Rohstoffe, vornehmlich Metalle wie Chrom, Platin, Titan, etc., zugefügt werden, um die Struktur des gebildeten Oxids nach der Röstung zu beeinflussen.
Die fast feststofffreie Metalllösung wird im Anschluss direkt dem Sprühröstreaktor 16 zugeführt.
Zur Rückgewinnung der Salzsäure wird dabei die wässrige AlCl₃-Lösung mit Hilfe von Düsen in feinen Tropfen in den beheizten Sprühröstreaktor 16 gesprüht. Durch die Wärmentwicklung verdampft zuerst die Flüssigkeit (Verdampfungsphase) und anschließend beginnen sich die Metallverbindungen zu zersetzen (Oxidationsphase). Die Tropfen fallen im freien Fall zum Reaktorunterteil und werden innerhalb weniger Sekunden geröstet, d.h. pyrolytisch in ein Metalloxid und einen Säureanteil getrennt. Die Säureanteile werden am Reaktorkopf und das Aluminiumoxid (Al₂O)₃ über eine Öffnung im Reaktorboden entfernt. Ein Teil des Aluminiumoxids kann auch im Staubabscheider zur Reinigung der gasförmigen Säureanteile anfallen. Die gasförmigen Säureanteile (HCl_{gas}) werden anschließend in einer Absorptionskolonne 17 absorbiert bzw. kondensiert.
Die rückgewonnene Salzsäure (HCl_{lq}) kann dann wieder der Auflösestufe 14 zugeführt werden.

Das im Sprühröstreaktor 16 anfallende Aluminium wird hier im Anschluss einer thermischen Nachbehandlung 21 bei eine Temperatur von beispielsweise 1400°C bis 1900°C unterzogen und anschließend zur Oberflächenvergrößerung gemahlen. Die Feststoffanteile werden beim Filtrationsschritt 15 als Gemisch von Restfasern und Kunststoff mit anhaftender Restsäure ausgetragen und einer weiteren Reinigungsstufe 18 (z.B. einer Friktionsstufe mit mechanischen Trockner) zugeführt, dabei werden Fasern 2 und Reststoffe 9 vom Kunststoff 3 abgetrennt.
Die Kunststoffe 3 fallen nach einer Nachwäsche 19 und einer allfälligen Trocknung rein und pH neutral als Verkaufsstoff oder als Fertigstoff für eine integrierte Granulierung an. Das säurehaltige Waschwasser kann für die Absorption der gasförmigen Säurebestandteile in 17 verwendet werden.

Die Abgase aus dem Säurerückgewinnungsprozess 16, 17 werden in einer Gasreinigung 20 gereinigt, z.B. mit Hilfe einer katalytischen Nachreinigung.

Ein Verfahrensschema für das Recycling von Blister-Verpackungen kann bis auf die Aggregate zur Faserabtrennung und Faserreinigung gleich aufgebaut sein.

## Patentansprüche

1. Verfahren zur Aufbereitung von Verpackungsmaterialien, die Kunststoffe und Aluminium und gegebenenfalls Faserstoffe enthalten, wie beispielsweise Getränkekartons oder Blister, **dadurch gekennzeichnet, dass** nach dem Abtrennen der Faserstoffe das Aluminium in einer Säure zur Bildung einer metallhaltigen Lösung der Säure aufgelöst wird, wobei Eisen oder Kupfer oder andere in Salzsäure lösliche Metalle außer Aluminium vor dem Auflösen des Aluminiums in der Säure mittels Magneten, Eddy Current Technologie bzw. mit NIR, XRF, Induktion gekoppelt mit Ausblassystem oder SchwimmSink-Technologie entfernt werden und dass die metallhaltige Lösung der Säure von den Kunststoffen abgetrennt wird und dass die metallhaltige Lösung zur Bildung von Aluminiumoxid pyrohydrolytische behandelt wird mit anschließender Absorption bzw. Kondensation der dabei gebildeten gasförmigen Produkte zur Rückgewinnung der Säure.

2. Verfahren nach Anspruch 1, **dadurch gekennzeichnet, dass** die Verpackungsmaterialien auch Faserstoffe enthalten, wobei die Faserstoffe vor dem auflösen des Aluminiums zur Bildung einer Faserstoffsuspension abgelöst werden und wobei die Faserstoffsuspension von den Kunststoffen und vom Aluminium abgetrennt werden, bevor das Aluminium in der Säure aufgelöst wird.

3. Verfahren nach Anspruch 1 oder 2, **dadurch gekennzeichnet, dass** als Säure Salzsäure verwendet wird.

4. Verfahren nach Anspruch 1 oder 3, **dadurch gekennzeichnet, dass** die pyrohydrolytische Behandlung in einem Sprühröstreaktor (16) durchgeführt wird.

5. Verfahren nach einem der Ansprüche 1 bis 4, **dadurch gekennzeichnet, dass** das gebildete Aluminiumoxid thermisch nachbehandelt wird.

6. Verfahren nach Anspruch 5, **dadurch gekennzeichnet, dass** die thermische Nachbehandlung bei einer Temperatur zwischen 800°C und 2400°C erfolgt.

7. Verfahren nach Anspruch 5 oder 6, **dadurch gekennzeichnet, dass** die thermische Nachbehandlung in einem Drehrohrofen oder einem Plasmareaktor durchgeführt wird.

8. Verfahren nach einem der Ansprüche 1 bis 7, **dadurch gekennzeichnet, dass** das Aluminiumoxid gemahlen wird.

9. Verfahren nach einem der Ansprüche 1 bis 8, **dadurch gekennzeichnet, dass** das Aluminiumoxid einer Fraktionierung nach Partikelgröße unterzogen wird.

10. Verfahren nach einem der Ansprüche 1 bis 9, **dadurch gekennzeichnet, dass** die im Schritt der pyrohydrolytischen Behandlung rückgewonnene Säure wieder zur Auflösung des Aluminiums verwendet wird.

11. Verfahren nach einem der Ansprüche 2 bis 10, **dadurch gekennzeichnet, dass** vor dem Auflösen des Aluminiums in der Säure noch an den Kunststoffen bzw. am Aluminium anhaftende Fasern in hochdynamischen Maschinen (13), wie Friktionsmaschinen, Pulper oder Friktionstrocknern, separiert werden.

12. Verfahren nach einem der Ansprüche 2 bis 11, **dadurch gekennzeichnet, dass** die Kunststoffe nach Abtrennung der metallhaltigen Lösung einer weiteren Reinigungsstufe (18) zugeführt werden, in der verbleibende Restfasern und Säurereste von den Kunststoffen entfernt werden.

13. Verfahren nach Anspruch 12, **dadurch gekennzeichnet, dass** die Kunststoffe gewaschen werden und dass das säurehaltige Waschwasser für die Absorption der gebildeten gasförmigen Produkte verwendet wird.

14. Verfahren nach einem der Ansprüche 1 bis 13, **dadurch gekennzeichnet, dass** die Kunststoffe und das Aluminium vor dem Auflösen des Aluminiums in der Säure zerkleinert werden.

15. Verfahren nach einem der Ansprüche 1 bis 14, **dadurch gekennzeichnet, dass die** metallhaltige Lösung vor der pyrohydrolytischen Behandlung nasschemisch oder physikalisch gereinigt wird.

16. Verfahren nach einem der Ansprüche 1 bis 15, **dadurch gekennzeichnet, dass der** metallhaltigen Lösung vor der pyrohydrolytischen Behandlung Zusatzstoffe wie Metalle zugefügt werden.

## Claims

1. Method for processing packaging materials containing plastics, aluminum and, as the case may be, pulps, for example beverage cartons or blister packages, **characterized in that** the aluminum is dissolved in an acid to form a metal-containing solution of the acid after the pulps have been separated, where iron or copper, or other metals that are soluble in hydrochloric acid other than aluminum, are removed using magnets, eddy current technology, or with NIR, XRF, or induction combined with a blow-out system or float-sink technology before the aluminum is dissolved in the acid, and **in that** the metal-containing solution of the acid is separated from the plastics, and the metal-containing solution undergoes pyrohydrolytic treatment in order to form aluminum oxide, followed by absorption or condensation of the gaseous products formed in this process so that the acid can be recovered.

2. Method according to Claim 1, **characterized in that** the packaging materials also contain pulps, where the pulps are detached to form a pulp suspension before the aluminum is dissolved and where the pulp suspension is separated from the plastics and aluminum before the aluminum is dissolved in the acid.

3. Method according to Claim 1 or 2, **characterized in that** the acid used is hydrochloric acid.

4. Method according to Claim 1 or 3, **characterized in that** the pyrohydrolytic treatment is conducted in a spray roasting reactor (16).

5. Method according to one of Claims 1 to 4, **characterized in that** the aluminum oxide formed undergoes thermal post-treatment.

6. Method according to Claim 5, **characterized in that** the thermal post-treatment takes place at a temperature between 800°C and 2400°C.

7. Method according to Claim 5 or 6, **characterized in that** the thermal post-treatment is conducted in a lime kiln or a plasma reactor.

8. Method according to one of Claims 1 to 7, **characterized in that** the aluminum oxide is ground.

9. Method according to one of Claims 1 to 8, **characterized in that** the aluminum oxide is subjected to fractionation according to particle size.

10. Method according to one of Claims 1 to 9, **characterized in that** the acid recovered in the pyrohydrolytic treatment stage is used again to dissolve the aluminum.

11. Method according to one of Claims 2 to 10, **characterized in that** any fibers still adhering to the plastics or aluminum are separated in highly dynamic machines (13), such as friction machines, pulpers, or friction dryers, before the aluminum is dissolved in the acid.

12. Method according to one of Claims 2 to 11, **characterized in that** the plastics are fed to an additional cleaning stage (18) after separating the metal-containing solution and the remaining fibres and acid residues are removed from the plastics in this stage.

13. Method according to Claim 12, **characterized in that** the plastics are washed and the wash water containing acid is used for absorption of the gaseous products formed.

14. Method according to one of Claims 1 to 13, **characterized in that** the plastics and the aluminum are shredded in the acid before the aluminum is dissolved.

15. Method according to one of claims 1 to 14, **characterized in that** the metal-containing solution is cleaned using wet chemical or physical methods before pyrohydrolitic treatment.

16. Method according to one of claims 1 to 15, **characterized in that** additives, such as metals, are added to the metal-containing solution before the pyrohydrolitic treatment.

## Revendications

1. Procédé de traitement de matériaux d'emballage qui contiennent des plastiques, de l'aluminium et, éventuellement, des matières fibreuses, comme par exemple des briques cartons ou emballages bulle, **caractérisé en ce qu'**après que les pâtes ont été séparées, l'aluminium est dissout dans un acide pour former une solution contenant du métal de l'acide, le fer ou le cuivre ou d'autres métaux solubles dans l'acide chlorhydrique sauf l'aluminium, sont éliminés à l'aide d'aimants, de la technologie de courant de Foucault, ou à l'aide de NIR, XRF, ou par induction en association avec un système de soufflage ou de technologique densimétrique avant que l'aluminium ne se dissolve dans l'acide, et **en ce que** la solution contenant du métal de l'acide est séparée des plastiques, et **en ce que** la solution contenant du métal est soumise à un traitement pyrohydrolytique afin de former l'oxyde d'aluminium, suivi par l'absorption ou la condensation des produits gazeux ainsi formés de sorte à récupérer l'acide.

2. Procédé selon la revendication 1, **caractérisé en ce que** les matériaux d'emballage contiennent également des matières fibreuses, les matières fibreuses étant dissoutes pour former une suspension de matière fibreuse avant que l'aluminium ne soit dissout et la suspension de matière fibreuse étant séparée des plastiques et de l'aluminium avant que l'aluminium ne se dissolve dans l'acide.

3. Procédé selon la revendication 1 ou 2, **caractérisé en ce que** l'acide utilisé est de l'acide chlorhydrique.

4. Procédé selon la revendication 1 ou 3, **caractérisé en ce que** le traitement pyrohydrolytique est effectué dans un réacteur de grillage par pulvérisation (16).

5. Procédé selon l'une quelconque des revendications 1 à 4, **caractérisé en ce que** l'oxyde d'aluminium formé est soumis à un post-traitement thermique.

6. Procédé selon la revendication 5, **caractérisé en ce que** le post-traitement thermique s'effectue à une température comprise entre 800°C et 2 400°C.

7. Procédé selon la revendication 5 ou 6, **caractérisé en ce que** le post-traitement thermique s'effectue dans un four à chaux rotatif ou dans un réacteur à plasma.

8. Procédé selon l'une quelconque des revendications 1 à 7, **caractérisé en ce que** l'oxyde d'aluminium est moulu.

9. Procédé selon l'une quelconque des revendications 1 à 8, **caractérisé en ce que** l'oxyde d'aluminium est soumis à un fractionnement conformément à la granulation.

10. Procédé selon l'une quelconque des revendications 1 à 9, **caractérisé en ce que** l'acide récupéré au moment du traitement pyrohydrolytique est réutilisé pour dissoudre l'aluminium.

11. Procédé selon l'une quelconque des revendications 2 à 10, **caractérisé en ce que** les fibres qui adhérent encore aux plastiques ou à l'aluminium sont séparées dans des machines hautement dynamiques (13), telles que des machines à frottement, des pulpeurs ou des séchoirs à frottement avant que l'aluminium ne soit dissout dans l'acide.

12. Procédé selon l'une quelconque des revendications 2 à 11, **caractérisé en ce que** les plastiques, après la séparation de la solution contenant du métal, sont amenés à une étape de nettoyage supplémentaire (18) dans laquelle les fibres restantes et les résidus d'acide sont éliminés des plastiques.

13. Procédé selon la revendication 12, **caractérisé en ce que** les plastiques sont lavés et **en ce que** l'eau de lavage contenant de l'acide est utilisée pour l'absorption des produits gazeux formés.

14. Procédé selon l'une quelconque des revendications 1 à 13, **caractérisé en ce que** les plastiques et l'aluminium sont broyés dans l'acide avant que l'aluminium ne soit dissout.

15. Procédé selon l'une quelconque des revendications 1 à 14, **caractérisé en ce que** la solution contenant du métal est nettoyée selon des procédés physique ou chimique par voie humide avant le traitement pyrohydrolytique.

16. Procédé selon l'une quelconque des revendications 1 à 15, **caractérisé en ce que** des additifs tels que des métaux, sont ajoutés à la solution contenant du métal avant le traitement pyrohydrolytique.
